# EUROPÄISCHE PATENTSCHRIFT

(11) **EP 0 537 476 B1**
(45) Veröffentlichungstag und Bekanntmachung des Hinweises auf die Patenterteilung: **26.07.1995**
(21) Anmeldenummer: 92115475.3
(22) Anmeldetag: 10.09.1992
(51) Int. Cl.: B23B 51/04, B23C 5/10

(54) **Fräskopf**
Milling head
Tête de fraisage

(30) Priorität: 30.09.1991 DE 9112169 U
(43) Veröffentlichungstag der Anmeldung: 21.04.1993
(73) Patentinhaber: Pokolm, Franz-Josef, 33428 Harsewinkel (DE)
(72) Erfinder: Pokolm, Franz-Josef, 33428 Harsewinkel (DE)
(74) Vertreter: Meldau, Gustav, Dipl.-Ing.

(56) Entgegenhaltungen:
- FR-A- 2 565 862
- FR-A- 2 581 329
- MACHINES ET PRODUCTIONS Nr. 193, 8. M rz 1978, BOULOGNE Seite 7 'en plein dedans'
- PATENT ABSTRACTS OF JAPAN vol. 9, no. 51 (M-361)(1774) 6. M rz 1985

## Beschreibung

Die Erfindung bezieht sich auf einen Fräskopf für Kopier- und CNC-Fräsmaschinen, mit mindestens zwei Schneidplatten, die an der Stirnseite des Fräskopfes derart angeordnet sind, daß ihre im wesentlichen im Verlauf der Fräserachse liegenden Frontseiten (die von der umlaufenden Schneidkante begrenzt sind) in einer Durchmesserebene liegen, wobei sich die Schneidkanten zumindest berühren oder sich überlappen und andererseits über die Mantelfläche des Fräskopfes ragen.

Derartige Fräsköpfe werden auch als Schaft- oder Fingerfräser bezeichnet. Der Fräskopf der gattungsgemäßen Art kennzeichnet sich dadurch aus, daß mindestens zwei Schneidplatten derart angeordnet sind, daß ihre im wesentlichen im Verlauf der Fräserachse liegenden Frontseiten (die von der umlaufenden Schneidkante begrenzt sind) in einer Durchmesserebene liegen, wobei sich die Schneidkanten zumindest berühren oder sich überlappen und andererseits die Mantelfläche des Fräskopfes überragen. Durch die Anordnung der Schneidkanten in einer in der Drehachse des Fräskopfes liegenden Ebene ist erreicht, daß beim Bohren der durch das Spanabheben verursachte Arbeitsdruck auf die Schneidplatten gleichmäßig symmetrisch auf den Bohrkopf wirkt. Durch die Berührung oder Überlappung der Schneidplatten im Bereich der Drehachse des Fräskopfes ist erreicht, daß sich insbesondere beim Bohren eine Selbstzentrierung einstellt. Beim Ansetzen des Fräskopfes im Bohrvorschub bleibt zwar zunächst in dem gebohrten Loch ein zentrischer Kegel stehen. Dieser hat jedoch allenfalls die Höhe des halben Durchmessers der Schneidplatten, in dem Fall das diese sich in der Drehachse des Fräskopfes mit ihren Schneidkanten berühren. Da anschließend der Fräskopf vom Bohrvorschub auf seitlich gerichteten Fräsvorschub umgestellt wird, wird auch dieser stehengebliebene zentrische Kegel sogleich zerspant. Diese Arbeitsweise ist beispielsweise besonders vorteilhaft, insbesondere beim Kopierfräsen und beim Herstellen von Formwerkzeugen für das Kunststoffspritzen, weil diese Werkzeuge "aus dem vollen Block" herausgearbeitet werden. Mit dem Fräskopf kann daher zunächst eine tiefe Aushöhlung des Blockes im Bohrvorschub hergestellt werden und sogleich anschließend daran, ohne Wechsel des Werkzeuges, die Fräsbearbeitung mit seitlichem Vorschub. Es ist nicht mehr nötig, zunächst mit einem Bohrfräser zu arbeiten und dann das Werkzeug zu wechseln oder das Material, im wesentlichen seitlich fräsend, Schicht für Schicht spanend abzutragen bis die erwünschte Tiefe erreicht ist.

Ein derartig beschriebener Fräskopf ist aus der FR-A-2 565 862 bekannt. Das Dokument beschreibt einen Fräskopf mit sich überlappend angeordneten Scheiden, bei dem die Einzelschneide mit ihrer Rückseite flächig in einem ausgeformten Sitz angebracht ist. Die erforderliche Haltekraft der Schneide wird mittels der im Zentrum der Schneide vorgesehenen Spannschraube bzw. durch den sich ergebenden überlappenden Bereich erreicht. Demnach werden die beim Bohren oder Fräsen auftretenden Reaktionskräfte je nach Führung des Fräskopfes in dem zu bearbeitenden Material entweder durch den Überlappungsbereich oder durch die Haltekraft der Spannschraube aufgenommen, die in erster Linie die rechtwinklig auftretenden Kraftkomponenten aufnehmen. Insbesondere die Kraftkomponenten abzufangen, die beispielsweise beim Kurvenfräsen auftreten, eben die Kräfte die unter unterschiedlichen Winkeln auf die Schneidplatte einwirken, werden von der bekannten Einfassung nicht berücksichtigt. Diese auftretenden Kräfte bewirken ein spielbehaftetes Lösen der Schneiden an ihrer Sitzfläche, so daß die Schneiden zum "Rattern" neigen. Dies führt unwiderruflich zu Zerstörungen an den Sitzflächen des Fräskopfmaterial, so daß das Anbringen einer Ersatzschneide nicht mehr möglich ist.

Äußerst problematisch gestaltet sich die Halterung der Schneiden an dem Fräskopf, wenn kein Überlappungsbereich vorhanden ist und die Schneiden aneinander anliegen. Bei dieser Anordnung der Schneiden werden die Bohr- und Fräskräfte ausschließlich von der Halterungsschraube im Zentrum der Schneide ab- bzw. aufgefangen. Ein spielbehaftetes Lösen der Schneiden tritt bei dieser Anordnung noch früher auf, da Widerlager zum Abfangen der auftretenden Hebelkräfte an den Schneiden im Bereich der Sitzfläche gänzlich fehlen.

Es ist daher die Aufgabe der Erfindung einen nach dem Stand der Technik bekannten Fräskopf weiterzubilden, mit dem sowohl Fräs- als auch Bohrarbeiten beim Einsatz als Kopierfräser durchzuführen sind, wobei insbesondere die Wirtschaftlichkeit des Fräskopfes verbessert wird.

Diese Aufgabe wird bei einem Fräskopf der eingangs genannten Art erfindungsgemäß dadurch gelöst, daß die von den Schneidkanten begrenzten Frontflächen der Schneidplatten in dem Bereich, in dem sie in das Material des Fräskopfes formschlüssig eingebettet sind, von diesem Material übergriffen sind. Aufgrund dieser Ausbildung werden an dem Fräskopf Widerlagerflächen geschaffen, die insbesondere die auftretenden Reaktionskräfte abfangen. Diese Einbettung der Schneidplatten im Fräskopf verhindert ein Kippen der Platten gegenüber ihrer Aufspannung, so daß nicht nur höhere Vorschubsgeschwindigkeiten gefahren werden können, sondern insbesondere wird dadurch die Standzeit der Schneidplatten verlängert, weil aufgrund der Einfassung ein spielhaftes Lösen der Schneidplatten wirksam verhindert wird.

Vorteilhaft ist diese Übergreifung derart ausgebildet, daß sie unmittelbar innerhalb der Berührungs- bzw. Überlappungsstelle der Schneidplatten beginnt und mindestens etwa einen Achtel-Sektor der Schneidplatten umfaßt. Dieser übergreifende Bereich - und auch die Überlappungsstelle der Schneidplatten, wenn diese so angeordnet sind - liegen demjenigen Bereich der Schneidplatten weitgehend diagonal gegenüber auf den beim seitlichen Fräsvorschub, also bei unsymmetrischer Belastung des Fräsers, der Arbeitsdruck einwirkt. Dadurch wird erreicht, daß die Schneidplatten nicht nur allein von ihren Befestigungsschrauben gehalten sind, sondern gegen ein Kippen gegenüber dieser mittleren Befestigung besonders gut abgesichert sind, so daß auch bei starker und/oder unsymmetrischer Einwirkung des Arbeitsdruckes beim Zerspanen in seitlichem Vorschub ein Kippen der Schneidplatten mit Sicherheit verhindert ist.

Weiterhin sind zweckmäßig die Schneidplatten derart gelagert, daß ihre Rückseiten vollflächig auf dem Material des Fräskopfes aufliegen, wobei dieser angepaßt ausgeformt ist.

Durch diese vollflächige Auflage wird erreicht, daß sowohl beim Bohren als auch beim Fräsen der Arbeitsdruck der durch das Zerspanen erzeugt ist, zuverlässig und gleichmäßig von den Schneidplatten auf den Fräskopf übertragen und abgeleitet wird.

Die Schneidplatten können rund oder auch viereckig begrenzt sein. Wenn an den Schneidplatten gerade, gegeneinander gerichtete Schneidkanten vorhanden sind, ist die Aufspannung vorteilhaft derart ausgeführt, daß sie geneigt und zum Schneidbereich näher aneinanderliegen.

Dadurch ist eine günstigere Schneidleistung zu erreichen, insbesondere, weil die Schneidplatten in einem Bereich gegeneinander abgestützt sind in dem die Beanspruchung auf kurzem Weg in den Fräser überzuleiten ist bzw. die wechselweise einwirkenden Kräfte einander entgegengerichtet sind und sich so gegenseitig aufheben.

Die den Sitz der Schneidplatten bildenden Einformungen in dem Fräskopf sind zweckmäßig als spanabführende Nuten in Richtung auf den Einspannschaft fortgeführt. Wobei zweckmäßig diese Nuten wendelförmig ausgebildet sind.

Dadurch wird erreicht, daß die Späne sicher abgeführt werden und zwar insbesondere durch wendelförmig ausgebildete Nuten beim Bohrvorgang, da diese wie die Nuten bei einem Bohrer wirken.

Insgesamt ist nach der Erfindung ein Fräskopf geschaffen, der insbesondere als kleineres Werkzeug, als Finger- oder Schaftfräser mit geringerem Durchmesser, wesentlich stabiler ist und aufgrund seiner besonderen Ausbildung insbesondere beim Bohren eine symmetrische Aufnahme und Ableitung der auftretenden Kräfte erzeugt, so daß nicht durch einseitige Beanspruchung Bruchgefahr besteht. Damit sind punktschneidende Werkzeuge mit optimaler Stabilität geschaffen, die nicht nur als Fräswerkzeuge sondern auch zum Vollbohren verwendet werden können.

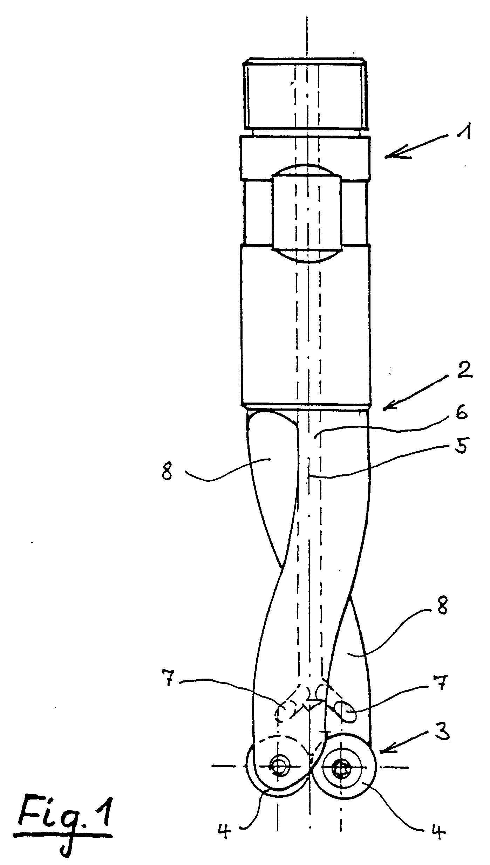

Die Erfindung wird nachstehend anhand von Ausführungsbeispielen mit Bezug auf die Zeichnungen näher erläutert. In den Zeichnungen zeigen:
- Figur 1:: Seitenansicht eines Fräskopfes oder Fingerfräsers;
- Figur 2:: Draufsicht;
- Figur 3:: Seitenansicht des Kopfteils einer Ausführungsform;
- Figur 4:: Draufsicht;
- Figur 5:: Seitenansicht einer weiteren Ausführungsform;
- Figur 6:: Draufsicht;
- Figur 7:: Seitenansicht einer weiteren Ausführungsform;
Ein Fräskopf oder Fingerfräser nach der Erfindung ist in Figur 1 allgemein in Seitenansicht dargestellt. Er besteht aus dem Einspannbereich 1, dem Schaft 2 und dem eigentlichen Kopfbereich 3, an dem die Hartmetall-Schneidplatten 4 eingespannt sind, in der Weise, daß sie in Richtung der Drehachse 5, also in radialer Achsrichtung, mit ihren Schneidkanten vorstehen und auch nach den Seiten, also in radialer Richtung, mit ihren Schneidkanten vorstehen können. Zweckmäßig ist innerhalb des Fräskopfes oder Fingerfräsers axial ein Zuleitungskanal 6 für Kühlwasser angeordnet, dessen Mündungen 7 zweckmäßig unmittelbar oberhalb der Schneidplatten 4 liegen. Von den Schneidplatten erstrecken sich in Richtung auf den Schaft eingenommene Nuten 8 zur Ableitung von Spänen, wobei diese Nuten 8 wendelförmig angeordnet sein können, vergleichbar zu einem Bohrer.

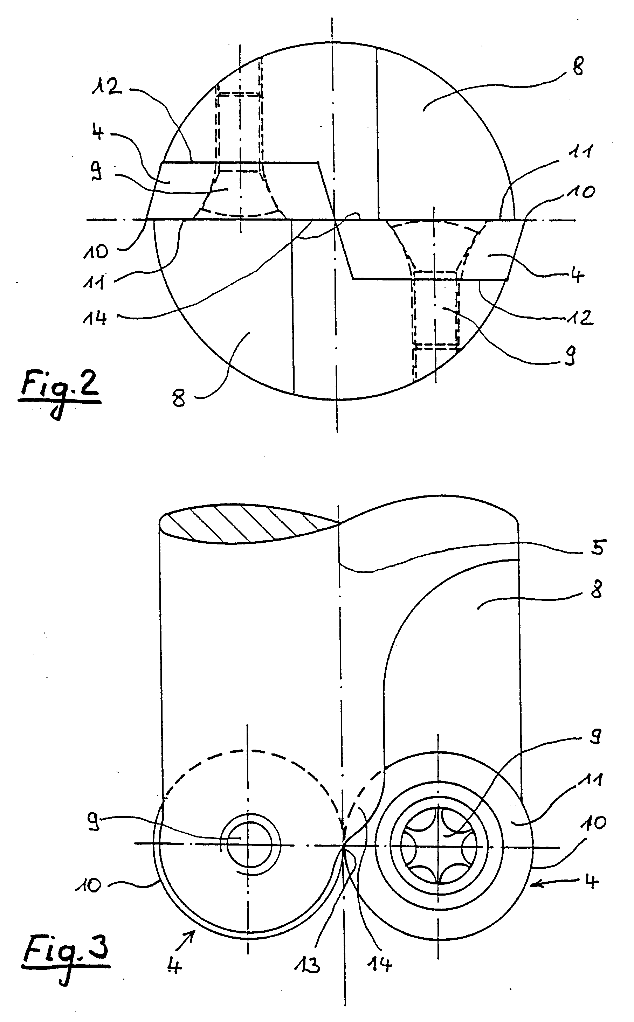

Nach dem Ausführungsbeispiel entsprechend den Figuren 2 und 3 sind an der Frontseite des Fräskopfes bzw. Fingerfräsers zwei runde Schneidplatten 4 mittels zentraler Befestigungsschrauben 9 eingespannt.

Die Einspannung ist derart ausgebildet, daß die von den Schneidkanten 10 begrenzten kreisförmigen Flächen 11, also beim Fräsen die Frontseiten der Schneidplatten, in einer Durchmesserebene liegen. Dies ist besonders klar und deutlich aus der Figur 2 erkennbar, die eine Draufsicht auf die Stirnfläche des Fräsers wiedergibt. Die beiden Frontflächen 11 liegen danach in einer Ebene und diese Ebene ist eine Durchmesserebene des kreisförmig begrenzten Fräserschaftes oder- Kopfes.

Weiterhin ist die Aufspannung der Schneidplatten 4 derart ausgebildet, daß diese sich mit ihren Schneidkanten 10, die ja in der Durchmesserebene des Fräskopfes liegen, gegenseitig berühren und zwar genau zentrisch in der Mitte, also in der Drehachse 5 des Fräserkopfes oder -fingers. An den Außenseiten überragen die Schneidkanten 10 der beiden Schneidplatten die Außenkontur des Fingerfräsers.

Es ist erkennbar, daß aufgrund dieser besonderen Anordnung der Schneidplatten der Fräskopf bzw. -finger sowohl zum Bohren als auch zum Fräsen geeignet ist. Beim Bohrvorschub in Richtung der Drehachse 5 wird durch die Schneidkanten 10 der Schneidplatten 4 das Material des Werkstückes vor dem Fräser zerspant, wobei zwischen den beiden Schneidplatten, also im Zentrum des Bohrloches, ein eingewölbter Kegel zunächst stehen bleibt, der bis zu der zentrischen Berührungsstelle der beiden Schneidplatten reicht. Dieser Kegel wird beim Bohrvorschub auf seiner Mantelfläche zerspant, wobei die Spanabnahme bzw. Spanarbeit bei der Annäherung an das Zentrum bzw. die Drehachse 5 immer geringer wird, so daß also praktisch eine Spanung in der Drehachse nicht auftritt und in der Umgebung der Drehachse äußerst gering ist, wobei diese zusätzlich auch noch die Vorschubkomponente besonders mit aufnimmt und daher auch schräg verläuft. Es liegen daher andere Verhältnisse als bei allgemein mit Bohrer durchgeführten Bohrarbeiten vor, wo in der Drehachse und deren unmittelbaren Nachbarschaft das Material nicht zerspant werden kann, sondern nach den Seiten weggedrückt werden muß. Die Verhältnisse beim Bohren mit dem Fräskopf nach der Erfindung liegen also wesentlich günstiger und es kann daher auch mit wesentlich höheren Bohrvorschüben gearbeitet werden. Hinzu kommt, daß aufgrund der Schneidenform der runden Schneidplatten eine hervorragende Brechung und Zerkleinerung der Späne erfolgt, es werden beim Bohren nicht die üblichen bekannten langen Spanspiralen erzeugt, die beim Abführen erhebliche Schwierigkeiten und auch Störungen erzeugen. Aufgrund der Anordnung der beiden Schneidplatten 4 und ihrer Berührungsstelle in der Drehachse 5 ist eine Selbstzentrierung beim Bohren vorhanden, weil in dieser Durchmesserebene in der die Schneidkanten 10 liegen, sämtliche auftretenden Kräfte völlig symmetrisch zur Drehachse 5 auftreten, einander entgegengesetzt sind und daher entsprechend leicht abgeleitet bzw. gegeneinander aufgehoben werden können.

Um die Kraftaufnahme und Einspannung der Schneidplatten 4 zu verbessern, sind diese nach der Erfindung in dem Material des Fräskopfes bzw. -fingers möglichst weitgehend formschlüssig eingebettet, das heißt, daß die Schneidplatten an den Stellen an denen ihre Schneidkanten nicht im Einsatz stehen in formschlüssige Nuten eingesetzt sind, wobei das Material des Fräskopfes praktisch vollflächig gegen die Rückseiten 12 der Schneidplatten anliegt, so daß diese insbesondere auch bei seitlichem Fräsvorschub gut abgestützt sind, und die insbesondere an den Seiten, den seitlichen Überständen der Schneidkanten 10 (Figur 2) entstehenden Kräfte - der Arbeitsdruck - gut und gleichmäßig abgeleitet werden.

Weiterhin ist der Fräskopf derart ausgebildet, daß unmittelbar innerhalb der zentrischen Berührungsstellen 13 der beiden Schneidplatten das Material des Fräsers die Frontfläche 11 einer jeden Schneidplatte 4 übergreift. Diese Übergreifung 14 umfaßt die Schneidplatte etwa in dem Bereich besonders wirksam, in dem sich das Kippmoment aufgrund des an der gegenüberliegenden Seite einwirkenden Arbeitsdruckes auswirkt, das bestrebt ist, die Schneidplatte 4 um eine durch die Halteschraube 9 hindurchgehende Kippachse gegenüber der Auflage auf ihrer Rückfläche 12 zu kippen. Diese Übergreifung 14 wird lediglich durch die Spanabführungsnut 8 begrenzt, sie kann daher wesentlich breiter, als in Figur 3 dargestellt, sein, wenn dafür gesorgt ist, beispielsweise durch entsprechend wirksame Führung der Kühlwasserkanäle, daß anderweitig eine vollständige Abführung der Späne sichergestellt ist. Diese "Einbettung" der Schneidplatten durch die ein Kippen der Platten gegenüber ihrer Aufspannung wirksam verhindert ist, erlaubt zusätzlich zu den vorgenannten anderen Maßnahmen eine Erhöhung der Vorschubgeschwindigkeiten und damit eine größere Wirtschaftlichkeit. Auch wird die Standzeit der Schneidplatten erhöht, weil ein Rattern der Schneidplatten aufgrund ungenügender Aufspannung wirksam verhindert ist.

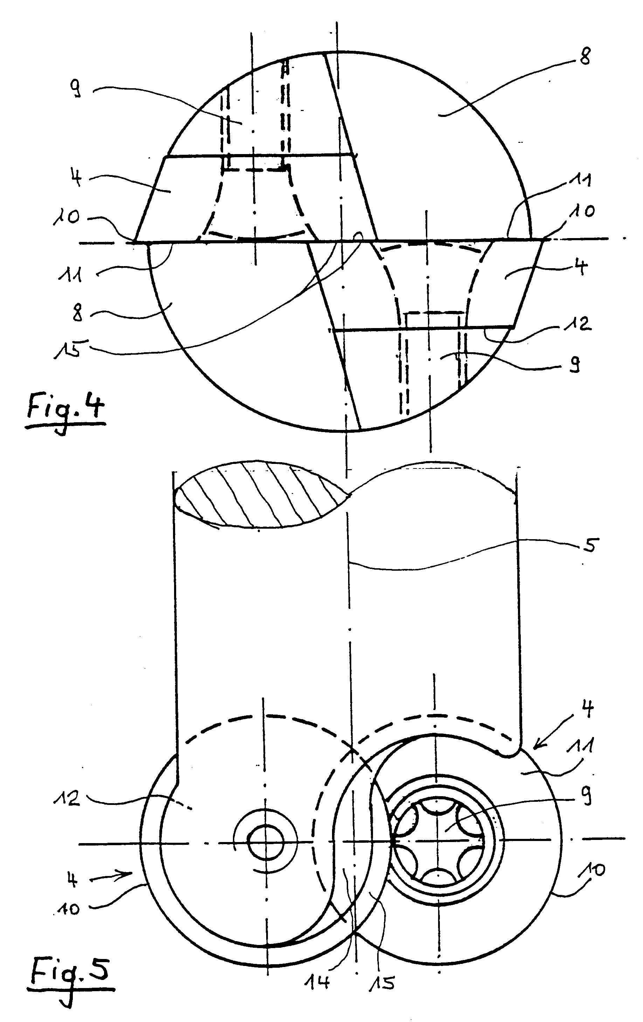

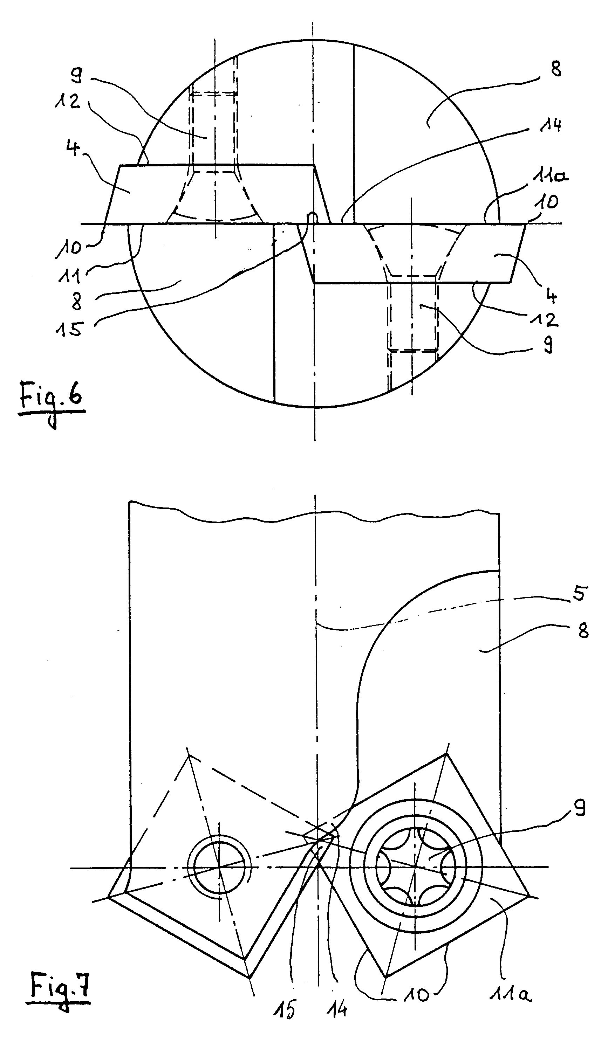

Die Ausführungsform nach den Figuren 4 und 5 stellt die in gewisser Hinsicht eine Weiterbildung der vorbeschriebenen Ausführung nach den Figuren 2 und 3 dar. Bei diesem Ausführungsbeispiel sind die beiden Schneidplatten 4 derart aufgespannt, daß sich ihre Frontflächen 11 gegenseitig überlappen im Bereich der Drehachse, diese Überlappung 15 ist bei dem dargestellten Ausführungsbeispiel extrem ausgeführt. Es ist erkennbar, daß beim Bohrvorschub in axialer Richtung ein verhältnismäßig niedriger und sehr flacher Kegel vom Material des Werkstückes im Zentrum des Bohrloches stehen bleibt, so daß mit dieser Ausführung auch reine Bohrarbeiten durchgeführt werden könnten.

Der Überlappung 15 der beiden Schneidplatten 4 entspricht bei dieser Ausführungsform selbstverständlich auch eine weitergehende Ausführung der Übergreifung 14 des abstützenden Fräsermaterials, so daß nach diesem Ausführungsbeispiel die Schneidplatten im Bereich der Drehachse 5 des Fräsers gewissermaßen doppelt abgestützt sind, und zwar einmal gegeneinander und weiterhin auch gegen das Material des Fräskopfes. Aufgrund der Abstützung gegeneinander werden die auf die Schneidplatten an ihren Außenseiten einwirkenden Arbeitskräfte unmittelbar gegeneinander wirken lassen und sie heben sich gewissermaßen gegenseitig auf, während beispielsweise beim seitlichen Fräsvorschub, bei dem ja die "Rückseite" des Fräskopfes nicht im spanenden Eingriff ist und damit dort die Schneidplatten jeweils leerlaufen, die an der Frontseite in Vorschubrichtung einwirkenden Kräfte auf das Material des Fräskopfes an der Übergreifungsstelle 14 unmittelbar bzw. unter Zwischenschaltung der überlappenden gegenüberliegenden Schneidplatte abgeleitet werden.

Aus der Beschreibung der vorstehenden beiden Ausführungsbeispiele ist ersichtlich, daß anstelle der hier dargestellten kreisförmig begrenzten Schneidplatten auch Schneidplatten verwendet werden können, die eine flachovale Begrenzung aufweisen, wobei die gradlinig verlaufenden Schneidkanten der beiden Schneidplatten jeweils einander gegenüberliegen bzw. auf den Außenseiten voneinander weggerichtet sind, das heißt, daß die gradlinig begrenzten Schneidkanten auch diejenigen Kantenbereiche der Schneidplatten sind, die sich im Bereich der Drehachse berühren bzw. überlappen. Bei Verwendung von flachoval begrenzten Schneidplatten ist es vorteilhaft, diese in der Weise einzuspannen, daß sie mit den gegeneinander gerichteten gradlinigen Bereichen der Schneidkanten gegenüber der Drehachse schräg geneigt sind, wobei sie sich an der Frontseite unmittelbar berühren oder überlappen, so daß ein Bild entsprechend den Figuren 3 oder 5 entsteht, während sie sich an den von der Frontseite entfernten Bereich auch voneinander entfernen, so daß ihre gegenüberliegenden Bereiche im Bohrloch praktisch einen Konus erzeugen. Durch diese Anordnung wird insbesondere ein besseres Freischneiden des Fräskopfes erreicht.

Bei dem Ausführungsbeispiel bei den Figuren 6 und 7 sind die unmittelbar vorstehend beschriebenen Verhältnisse bei graden Schneidkanten gewissermaßen übernommen für den Einsatz von quadratisch (oder auch rechteckig) begrenzten Schneidplatten. Diese Schneidplatten 11a sind bei dem Ausführungsbeispiel nach den Figuren 6 und 7 derart eingesetzt und gelagert, daß ihre Diagonalen, also die Verbindenen, zwischen ihren Ecken und damit auch ihre Schneidkanten 10 gegenüber der Drehachse 5 geneigt sind. Die innersten Ecken bilden eine Überlappung 15 miteinander, so daß sich die beiden Schneidplatten 4a, die quadratisch begrenzt sind, in ihren inneren Ecken gegeneinander abstützen. Zusätzlich befindet sich in diesem Bereich auch noch eine Übergreifung 14, durch das Material des Fräskopfes, so daß die Schneidplatten 4a mit gradliniger Begrenzung in dem inneren Aufspannbereich praktisch formschlüssig eingebettet sind, so daß sie unter Belastung nicht kippen können, im Bereich der Überlappung einwirkende Druckkräfte aufgrund des Arbeitsdruckes unmittelbar aufeinander ableiten und damit gegenseitig aufheben und im übrigen auch die einwirkenden Kräfte im Bereich der Übergreifung 14 auf den Fräskopf ableiten.

Durch die Neigung der Schneidkanten 10 in der Nachbarschaft der Drehachse 5 ergibt sich beim Bohren die Ausformung eines verhältnismäßig sehr spitzen Kegels, so daß auch hier die Zerspanung im Bohrvorschub erheblich begünstigt ist und dadurch größere Vorschubgeschwindigkeiten darstellbar sind. Andererseits ergibt sich dadurch das die nach außen weisenden Schneidkanten in einem flachen Winkel gestellt sind, so daß beim seitlichen Fräsvorschub auf einem verhältnismäßig weiten Bereich eine geringe Spantiefe abgenommen wird. Die Spanarbeit bei verhältnismäßig dick abgenommenen Frässchichten ist daher verhältnismäßig gering und dementsprechend die Beanspruchung des Fräswerkzeuges und damit seine Standzeit wesentlich günstiger.

## Patentansprüche

1. Fräskopf für Kopier- und CNC-Fräsmaschinen, mit mindestens zwei Schneidplatten (4), die an der Stirnseite des Fräskopfes (1) derart angeordnet sind, daß ihre im wesentlichen im Verlauf der Fräserachse (5) liegenden Frontseiten (11), die von der umlaufenden Schneidkante (10) begrenzt sind, in einer Durchmesserebene liegen, wobei sich die Schneidkanten (10) zumindest berühren (13) oder sich überlappen (15) und andererseits über die Mantelfläche des Fräskopfes (1) ragen, **dadurch gekennzeichnet**, daß die von den Schneidkanten (10) begrenzten Frontflächen (11) der Schneidplatten (4) in dem Bereich, in dem sie in das Material des Fräskopfes (1) formschlüssig eingebettet sind, von diesem Material übergriffen (14) sind.

2. Fräskopf nach Anspruch 1, **dadurch gekennzeichnet**, daß das übergreifende Material (14) als eine formschlüssige Nut ausgebildet ist.

3. Fräskopf nach Anspruch 1 und 2, **dadurch gekennzeichnet**, daß der die Schneidplatten (4) übergreifende Bereich (14) durch das Material des Fräskopfes unmittelbar innerhalb der Berührungs- (13) bzw. Überlappungsstelle (15) der Schneidplatten (4) beginnt und mindestens etwa einen Achtel-Sektor der Schneidplatten umfaßt.

4. Fräskopf nach den Ansprüchen 1 bis 3, **dadurch gekennzeichnet**, daß die Rückseiten (12) der Schneidplatten (4) vollflächig auf dem Material des Fräskopfes (1) aufliegen, wobei dieser angepaßt ausgeformt ist.

5. Fräskopf nach einem der vorstehenden Ansprüche, **dadurch gekennzeichnet**, daß die Schneidplatten (4) quadratisch begrenzt sind.

6. Fräskopf nach Anspruch 5, **dadurch gekennzeichnet**, daß die Schneidplatten (4) mit ihren geraden, gegeneinander gerichteten Kanten gegenüber der Drehachse (5) geneigt eingespannt sind, wobei sie zum Schneidbereich hin näher aneinanderliegen.

7. Fräskopf nach einem der vorstehenden Ansprüche, **dadurch gekennzeichnet**, daß die den Sitz der Schneidplatten (4) bildenden Einformungen (14) in dem Fräskopf (1) als spanabführende Nuten (8) in Richtung auf den Einspannschaft (1) fortgeführt sind.

8. Fräskopf nach Anspruch 7, **dadurch gekennzeichnet**, daß die spanabführenden Nuten (8) wendelförmig ausgebildet sind.

9. Fräskopf nach einem der vorstehenden Ansprüche, **dadurch gekennzeichnet**, daß ein axialer Kanal (6) für die Kühlwasserführung in dem Fräskopf (1) angeordnet ist, dessen Auslässe unmittelbar oberhalb der Sitze für die Schneidplatten (4) liegen, und zwar in einer achsparallelen Verlängerung des Ortes der Aufspannschrauben.

## Claims

1. Milling head for copy and CNC milling machines, having at least two cutting disks (4) mounted on the face of the milling head (1) in such a way that their front sides (11), which are substantially lying on the milling axis (5) and are delimited by the rotating cutting edge (10), are lying in a diametral plane, the cutting edges (10) at least touching each other (13) or overlapping each other (15) and, at the other end, projecting beyond the body area of the milling head (1), characterized in that the front areas (11) of the cutting disks (4) delimited by the cutting edges (10) are covered by this material in the area in which they are positively embedded in the material of the milling head (1).

2. Milling head as claimed in Claim 1, characterized in that the covering material (14) has the form of a positive groove.

3. Milling head as claimed in Claims 1 and 2, characterized in that the area (14) covering the cutting disks (4) because of the material of the milling head begins immediately within the point of contact (13) or overlap (15) of the cutting disks (4) and covers at least about an octant of the cutting disks.

4. Milling head as claimed in Claims 1 to 3, characterized in that the rear sides (12) of the cutting disks (4) rest with their whole area on the material of the milling head (1), the latter having a corresponding configuration.

5. Milling head as claimed in any one of the preceding claims, characterized in that the cutting disks (4) have a square shape.

6. Milling head as claimed in Claim 5, characterized in that the cutting disks (4) are clamped with their straight edges directed towards each other inclined in relation to the rotary axis (5), the distance between them decreasing towards the cutting area.

7. Milling head as claimed in any one of the preceding claims, characterized in that the recesses (14) in the milling head (1), which form the seating for the cutting disks (4), are continued as chip removing grooves (8) in the direction of the clamping shaft (1).

8. Milling head as claimed in Claim 7, characterized in that the chip removing grooves (8) are helically shaped.

9. Milling head as claimed in any one of the preceding claims, characterized in that an axial channel (6) for supplying cooling water is provided in the milling head (1), the outlets of which are immediately above the seatings for the milling disks (4), namely in an axially parallel extension of the location of the clamping screws.

## Revendications

1. Tête de fraisage pour machines de fraisage par copiage et CNC comportant au moins deux plaquettes de découpe (4) qui sont disposées sur la face frontale de la tête de fraisage (1) de telle sorte que leurs faces frontales (11) s'étendant sensiblement dans l'axe (5) de fraisage et qui sont délimitées par l'arête tranchante circonférentielle (10), se situent dans un plan diamétral, les arêtes tranchantes (10) se touchant (13) au moins ou se chevauchant (15) et faisant en outre saillie de la surface d'enveloppe de la tête de fraisage (1), caractérisée en ce que, dans la zone où elles sont encastrées dans la tête de fraisage (1), les surfaces frontales (11) des plaquettes de découpe (4) délimitées par les arêtes tranchantes (10), sont recouvertes par une empreinte (14).

2. Tête de fraisage selon la revendication 1, caractérisée en ce que l'empreinte de recouvrement (14) est une rainure de forme correspondante.

3. Tête de fraisage selon l'une des revendications 1 et 2, caractérisée en ce que l'empreinte (14) de la tête de fraisage recouvrant les plaquettes de découpe (4), commence à proximité immédiate du point de contact (13) ou de chevauchement (15) des plaquettes de découpe (4) et englobe au moins un secteur d'environ un huitième des plaquettes de découpe.

4. Tête de fraisage selon l'une des revendications 1 à 3, caractérisée en ce que les faces arrières (12) des plaquettes de découpe (4) prennent appui par toute leur surface sur la tête de fraisage (1), cette dernière étant conformée de façon adaptée.

5. Tête de fraisage selon l'une quelconque des revendications précédentes, caractérisée en ce que les plaquettes de découpe (4) sont délimitées de façon quadratique.

6. Tête de fraisage selon la revendication 5, caractérisée en ce que les plaquettes de découpe (4) sont enserrées avec leurs arêtes droites orientées l'une vers l'autre en position inclinée par rapport à l'axe de rotation (5), et en ce qu'elles sont plus proches l'une de l'autre vers la zone de coupe.

7. Tête de fraisage selon l'une quelconque des revendications précédentes, caractérisée en ce que les empreintes (14) constituant le siège des plaquettes de découpe (4) dans la tête de fraisage (1) sont prolongées sous la forme de rainures (8) d'évacuation des copeaux en direction de la queue de la tête de fraisage (1).

8. Tête de fraisage selon la revendication 7, caractérisée en ce que les rainures (8) d'évacuation des copeaux ont une forme hélicoïdale.

9. Tête de fraisage selon l'une quelconque des revendications précédentes, caractérisée en ce qu'un canal axial (6) destiné à la circulation de l'eau de refroidissement est disposé dans la tête de fraisage (1), ses sorties étant situées directement au-dessus des sièges des plaquettes de découpe (4), dans une direction qui est parallèle à l'axe d'implantation des vis de fixation.
